# EUROPEAN PATENT SPECIFICATION

(11) **EP 1 499 050 B1**
(45) Date of publication and mention of the grant of the patent: **27.02.2008**
(21) Application number: 04015771.1
(22) Date of filing: 05.07.2004
(51) Int. Cl.: H04J 3/16, H04J 3/14

(54) **Apparatus and method for generating synchronous multiplexing frames including TUG3/STS3 and TUG2/VTG channels**
Vorrichtung und Verfahren zur Erzeugung von synchronen multiplexierten Rahmen mit Kanälen der Typen TUG3/STS3 und TUG2/VTG
Dispositif et procédé de génération de trames multiplexées synchrones comprenant des canaux de types TUG3/STS3 et TUG2/VTG

(30) Priority: 14.07.2003 JP 2003196635
(43) Date of publication of application: 19.01.2005
(73) Proprietor: ANRITSU CORPORATION, Atsugi-shi, Kanagawa-ken (JP)
(72) Inventor: Tsunoda, Katsumi, Atsugi-shi Kanagawa-ken (JP)
(74) Representative: Balsters, Robert

(56) References cited:
- EP-A- 0 443 029
- WO-A-01/95561
- "MP1570A - Sonet/Sdh/Pdh/Atm Analyzer (Application note)" APPLICATION NOTE - MEASUREMENT GROUP ANRITSU CORPORATION, [Online] January 2000 (2000-01), XP002377493 Japan Retrieved from the Internet: URL:http://www.anritsu.co.jp/Products/pdf_ e/MP1570A_EF1100.pdf> [retrieved on 2006-04-19]
- "SIGNALWIZARD: all-channel testing technology (SONET)" PRODUCT NOTE FROM AGILENT TECHNOLOGIES, 1 May 2001 (2001-05-01), XP002178308
- "MP1570A - Sonet/Sdh/Pdh/Atm Analyzer (Application Note: APS Switch Time Measurement)" APPLICATION NOTE - MEASUREMENT GROUP ANRITSU CORPORATION, [Online] August 2000 (2000-08), XP002377494 Japan Retrieved from the Internet: URL:http://www.anritsu.co.jp/Products/List _E.asp?SID=76> [retrieved on 2006-04-19]

## Description

The present invention relates to an apparatus and method for generating a synchronous multiplexing frame for testing equipment or the like for use in a synchronous transmission system such as an SDH (Synchronous Digital Hierarchy) scheme or a SONET (Synchronous Optical Network). More particularly, the present invention relates to an apparatus and method for generating a synchronous multiplexing frame which employs a technique capable of setting a frame structure of each channel containing data to be inserted into a payload portion, including TUG3/STS3 and TUG2/VTG channels.

In synchronous transmission systems, such as SDH or an SONET, multiplexing processing for generating high speed frame data by multiplexing low speed frame data by a plurality of channels is repeated by a predetermined number of stages, thereby generating synchronous multiplexing frame data at a predetermined transmission speed, and the data generated is transmitted to a transmission channel.

Equipment for use in such a synchronous transmission system is constructed to extract data for a desired channel from inputted synchronous multiplexing frame data and carry out a variety of processing operations.

Therefore, in order to carrying out testing of the equipment for use in the synchronous transmission system, there is a need for a synchronous multiplexing frame generating apparatus for generating frame data having measurement data inserted into a predetermined channel of a payload portion.

This synchronous multiplexing data has a predetermined multiplexing structure. For example, in non-patent document ITU-T G. 707, a multiplexing structure of the SDH scheme is defined as shown in FIG. 10.

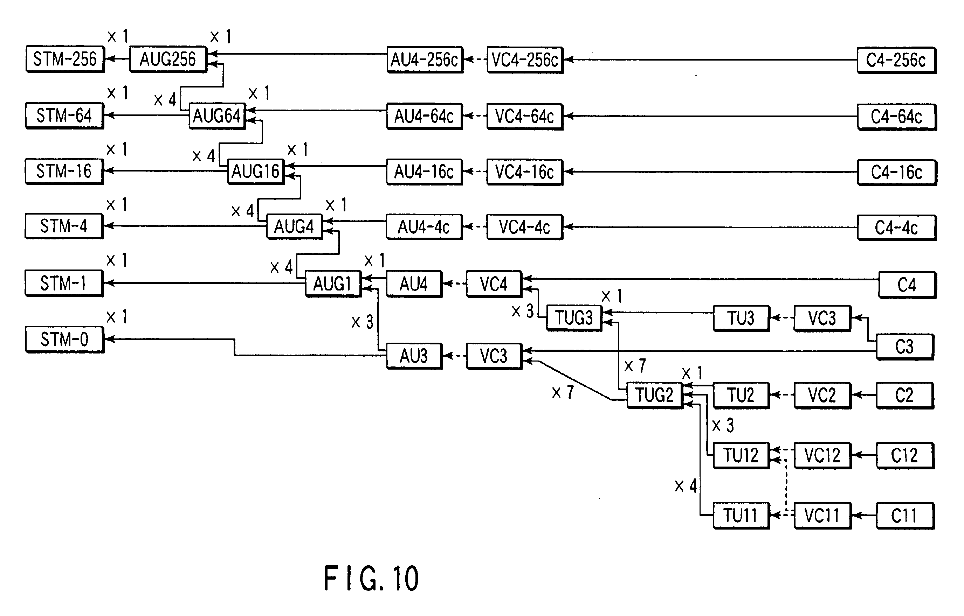

In this multiplexing structure of the SDH scheme shown in FIG. 10, a description will be given with respect to a process of generating an STM-1 frame of a bit rate of 155.52 Mb/s, for example, of the STM (Synchronous Transport Mode)-N (N = 0, 1, 4, 16, 64, 256).

In FIG. 10, C11, C12, C2, C3, C4, C4-4c, C4-16c, C4-64c, and C4-256c each designate a container for containing information at a predetermined speed.

Also, in FIG. 10, STM-0, STM-1, STM-4, STM-16, STM-64, and STM-256 on the left side each denote an STM-N frame multiplexed at a predetermined speed.

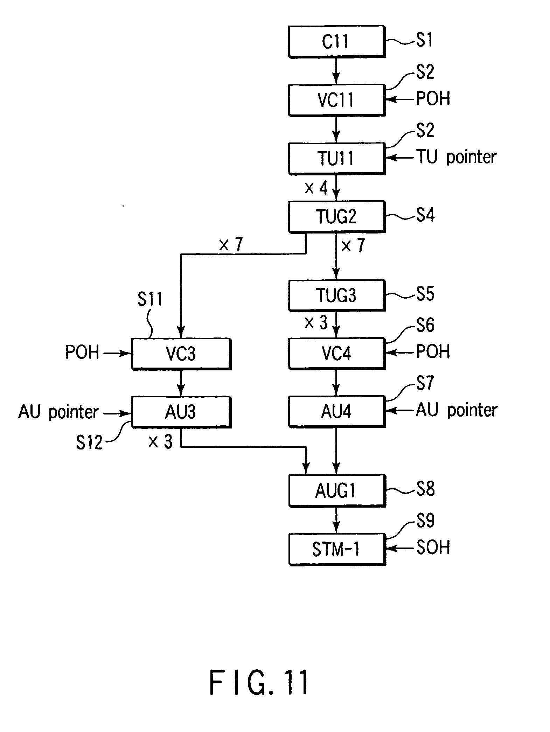

That is, in this case, first, in step S1, a container C11 for containing low speed frame data such as primary group information (1.544 Mb/s) is prepared as shown in FIG. 11.

Next, in step S2, a low order virtual container VC11 is generated by adding a POH (path overhead) composed of address information such as a transmission source or destination relevant to information on the container C11.

Then, in step S3, a TU (Tributary Unit) pointer is added to the virtual container VC11 to generate TU11 data.

Subsequently, in step S4, TUG (Tributary Unit Group) 2 data is generated by collecting the TU data by 4 channels.

As shown in FIG. 10, instead of the container C11, TUG2 data may be generated by using containers C12, C2 with a speed which is different from that of the container C11.

Then, in step S5, TUG3 data is generated by collecting the TUG2 data by 7 channels.

Then, in step S6, a high order virtual container VC4 is generated by adding a POH obtained by collecting the TUG3 data by 3 channels.

Next, in step S7, one set of AU4 data is generated by adding an AU (Administrative Unit) pointer to this virtual container VC4.

Subsequently, in step S8, AUG (Administrative Unit Group) 1 data composed of such one set of AU4 data is generated.

Then, in step S9, a frame of STM-1 is completed by adding an SOH (section overhead) to this AUG1.

Further, another multiplexing structure for generating STM-1 is such that, first, processing goes from the step S4 to step S11 in which a high order virtual container VC3 is generated by adding the POH to data obtained by connecting the TUG2 data generated in the step S4 by 7 channels.

Then, in step S12, AU3 data is generated by adding the AU pointer to this high order virtual container VC3.

In addition, in the step S8, AUG1 data is generated by collecting this AU3 data by 3 channels.

Next, in the step S9, a frame of STM-1 is completed by adding the SOH to this AUG1 data.

In the synchronous multiplexing frame generating apparatus for generating a synchronous multiplexing frame used for testing equipment for the above described synchronous transmission system, there is a need for carrying out multiplexing processing as described above to generate synchronous multiplexing frame data having a desired speed.

Conventionally, as such a synchronous multiplexing frame generating apparatus, there is proposed a technique capable of arbitrarily setting frame structure with respect to 3 channels of TUG3 data of an STM-N frame in the SDH scheme, the technique commonly using each frame structure for 7-channel TUG2 data.

Hence, in such a conventional technique, each frame structure of the 7-channel TUG2 data is commonly used, thus making it impossible to easily grasp what structure is produced by the frame structure of each channel of the TUG2. In addition, there is an inconvenience that the operation and testing cannot be carried out for equipment for a synchronous transmission system with a frame structure which is different from another with respect to each channel of the TUG2.

The document "MP1570A - SONET/SDH/PHD/ATM Analyzer (Application Note)", of Measurement Group of Anritsu Corporation, January 2000, XP002377493, and the document "SignalWizard: all-channel testing technology (SONET)", May 1, 2001, Product note from Agilent Technologies, XP002178308, respectively disclose a synchronous multiplexing frame generating apparatus for generating a synchronous multiplexing frame in an SDH (Synchronous Digital Hierarchy) scheme or an SONET (Synchronous Optical Network) scheme, for testing equipment for a synchronous transmission system, the apparatus comprising a payload data generating portion which generates payload data to be inserted into a frame structure for each of a TUG3/STS3 channel and a TUG2/VTG channel at a payload portion of the synchronous multiplexing frame.

This problem also occurs in frame generation of the SONET scheme defined in Telcordia Technologies or the like. In the SONET, the STS (SynchronousTransport Signal) 3 and the VTG (Virtual Tributary Group) correspond to the TUG3 and the TUG2 in the STM-1 frame of the SDH scheme.

It is an object of the present invention to provide a synchronous frame generating apparatus and method, for testing equipment for a synchronous transmission system, the apparatus and method being capable of arbitrarily setting a frame structure of each channel of data to be inserted into a payload portion in a synchronous multiplexing frame of an SDH (Synchronous Digital Hierarchy) scheme or an SONET (Synchronous Optical Network) scheme, including TUG3/STS3 and TUG2/VTG channels.

It is another object of the present invention to provide a synchronous multiplexing frame generating apparatus and method, for testing equipment for a synchronous transmission system, the apparatus and method being capable of: arbitrarily setting a frame structure of each channel of data to be inserted into a payload portion in a synchronous multiplexing frame of an SDH (Synchronous Digital Hierarchy) scheme or an SONET (Synchronous Optical Network) scheme, including TUG3/STS3 and TUG2/VTG channels; and easily identifying a channel for use in measurement.

According to a first aspect of the present invention, there is provided a synchronous multiplexing frame generating apparatus for generating a synchronous multiplexing frame in an SDH (Synchronous Digital Hierarchy) scheme or a SONET (Synchronous Optical Network) scheme, for testing equipment for a synchronous transmission system, the apparatus comprising:
a payload data generating portion (21) which generates payload data to be inserted into a frame structure for each of a TUG3/STS3 channel and a TUG2/VTG channel at a payload portion of the synchronous multiplexing frame;
an operating portion (35) capable of arbitrarily setting a frame structure of each channel which is included in the payload data to be inserted into the payload portion including TUG3/STS3 and TUG2/VTG channels;
a display (36) which displays a process of generating the desired synchronous multiplexing frame;
a payload structure setting portion (40) which sets: a frame structure of each channel which is included in the payload data to be inserted into the payload portion to a desired structure according to an arbitrary setting by the operating portion including the TUG3/STS3 and TUG2/VTG channels; and lists and displays the frame structure of each channel which is included in the payload data generated by the payload data generating portion, the frame structure being set to the desired structure, in a desired mode on the display including the TUG3/STS3 and TUG2/VTG channels; and
a frame generating portion (30) which multiplexes the payload data generated by the payload data generating portion (21) and inserts the payload data into the payload portion, and adds a header portion to the payload portion to generate the desired synchronous multiplexing frame and output the generated frame to a measurement target.

According to a second aspect of the present invention, there is provided a synchronous multiplexing frame generating apparatus according to the first aspect, wherein the synchronous multiplexing frame is provided as an STM (Synchronous Transport Mode) frame of the SDH scheme or an STS (Synchronous Transport Signal) frame of the SONET scheme,
wherein the payload structure setting portion (40) lists and displays in a desired mode on the display (36) a frame structure of each channel in a TUG (Tributary Unit Group) 3 in the STM frame of the SDH scheme which is included in the payload data generated by the payload data generating portion (21) or an STS3 in the STS frame of the SONET scheme and a TUG2 in the STM frame of the SDH scheme or a VTG (Virtual Tributary Group) in the STS frame in the SONET scheme, and
a frame structure of each channel in the TUG3 in the STM frame in the SDH scheme which is included in the payload data generated by the payload data generating portion (21) or the STS3 in the STS frame of the SONET scheme and the TUG2 in the STM of the SDH scheme or the VTG in the STS of the SONET scheme can be set to a desired structure according to an arbitrary setting by the operating portion (35).

According to a third aspect of the present invention, there is provided a synchronous multiplexing frame generating apparatus according to the first aspect, wherein
the payload structure setting portion (40) has measurement channel specifying means for specifying a channel for use in measurement according to the arbitrary setting by the operating portion (35), and
a channel specified by the measurement channel specifying means is displayed to be identifiable from another channel, of frame structures displayed in a list for each channel on the display (36).

According to a fourth aspect of the present invention, there is provided a synchronous multiplexing frame generating apparatus according to the second aspect, wherein
the synchronous multiplexing frame is provided as an STM frame in the SDH scheme or an STS frame in the SONET scheme, and
the payload data generating portion (21) has: a low order virtual container generating portion (22) which generates a low order virtual container in the STM frame of the SDH scheme or in the STS frame of the SONET scheme; TUG2 or VTG data generating portions 23(1, 1) to 23(3, 7) each having a 3 x 7 channel structure, each of which generates TUG2 data in the STM frame of the SDH scheme or a VTG data in the STS frame of the SONET scheme; and TUS3 or STS3 data generating portions 24(1) to 24(3) each having 3 channel structures for generating TUG3 data in the STM frame of the SDH scheme or STS3 data in the STS frame of the SONET scheme.

According to a fifth aspect of the present invention, there is provided a synchronous multiplexing frame generating apparatus according to the fourth aspect, wherein the low order virtual container generating portion (22) is constructed to, in accordance with a frame structure set by the payload structure setting portion (40) in the case of generating a low order virtual container (VC11, VC12, VC2) in the STM frame of the SDH scheme, generate low order virtual containers VC1 and VC2 based on a container C1 (composed of a container C11 of 1.544 Mb/s and a container C12 of 2.048 Mb/s) having contained therein low speed frame data and a container C2 (6.312 Mb/s) and output these VC1 (VC11, VC12, VC2) and VC2 to each of the TUG2 data generating portions 23 (1, 1) to 23(3, 7).

According to a sixth aspect of the present invention, there is provided a synchronous multiplexing frame generating apparatus according to the fifth aspect, wherein each of the TUG2 data generating portions 23(1, 1) to 23(3, 7) is constructed to provide, by 3 x 7 channels, while collecting, by 3 channels, TUG3 data (TUG3(1)-TUG3(3)) obtained by collecting 7 channels (TUG2(1, 1)-TUG2(1, 7), TUG2(2, 1)-TUG2(2, 7), TUG2(3, 1)-TUG2(3, 7)) of TUG2 by means of the operating portion (35) via the payload structure setting portion (40) for the purpose of preparation for a case in which there has been specified a frame structure for generating a high order virtual container VC4, and to generate TUG2 data for the 3 x 7 channel upon the receipt of the low order virtual container by multiplexing TU1 data only after generating TU1 and TU2 data by adding a TU pointer.

According to a seventh aspect of the present invention, there is provided a synchronous multiplexing frame generating apparatus according to the sixth aspect, wherein, in the case where there has been specified a frame structure for generating a high order virtual container VC4 while collecting, by 3 channels, TUG3 data obtained by collecting n channels of TUG2 by means of the operating portion (35) via the payload structure setting portion (40), TUG2 data for 3 x 7 channels generated by the TUG2 data generating portions 23(1, 1) to 23(3, 7) are inputted to the TUG3 data generating portions 24(1) to 24(3) by 7 channels, the inputted data is collected as TUG3(1) to TUG3(3) data for 3 channels, and the collected data is outputted to the frame generating portion (30).

According to an eighth aspect of the present invention, there is provided a synchronous multiplexing frame generating apparatus according to the sixth aspect, wherein, in the case where there has been specified a frame structure using a virtual container VC3 which is added a POH (Path Overhead) to a container C3 (44.736 Mb/s or 34.368 Mb/s) for any one of 3 channels of TUG3 by means of the operating portion (35) via the payload structure setting portion (40), a TUG3 data generating portion corresponding to a channel specified in the TUG3 data generating portions 24(1) to 24(3) of the 3 channels is constructed to output to the frame generating portion (30) the TUG3 data from the TUG3 data generating portion (24) as the TUG3 data by generating TU3 data to add a TU pointer to a low order virtual container VC3 generated by the low order virtual container generating portion (22) without using the TUG2 data.

According to a ninth aspect of the present invention, there is provided a synchronous multiplexing frame generating apparatus according to the seventh aspect, wherein
the frame generating portion (30) has an AU data generating portion (30) and a header adding portion (32),
data TUG3(1) to TUG3(3) for the 3 channels are inputted to the AU data generating portion (31),
the AU data generating portion (31) generates a high order virtual container VC4 by adding a POH (path overhead) to a collection of data TUG3(1) to TUG3(3) for 3 channels, and generates one set of AU4 data by adding an AU pointer indicating an insert position of a frame to the virtual container VC4, thereby outputting the generated data to the header adding portion (32), and
the header adding portion (32) is constructed to complete a desired STM-N frame set by means of the operating portion (35) via the payload structure setting portion (40) by adding an SOH (section overhead) to AUG-1 data composed of the one set of AU4 data or AUG-N (N: 4, 16, 64, 256) data obtained by collecting the AUG1 data by a plurality of channels, thereby outputting the completed frame at a bit rate determined depending on N (N denotes any one of 1, 4, 16, 64, and 256) .

According to a tenth aspect of the present invention, there is provided a synchronous multiplexing frame generating apparatus according to the ninth aspect, wherein the header adding portion (32) N-multiplexes same AUG1 data in the case where the N is equal to or greater than 4.

According to an eleventh aspect of the present invention, there is provided a synchronous multiplexing frame generating method for generating a synchronous multiplexing frame in an SDH (Synchronous Digital Hierarchy) scheme or an SONET (Synchronous Optical Network) scheme, for testing equipment for a synchronous transmission system, the method comprising:
generating payload data to be inserted into a frame structure for each of a TUG3/STS3 channel and a TUG2/VTG channel at a payload portion of the synchronous multiplexing frame;
arbitrarily setting a frame structure of each channel which is included in the payload data to be inserted into the payload portion including TUG3/STS3 and TUG2/VTG channels;
setting: a frame structure of each channel of the payload data to be inserted into the payload portion to a desired structure according to the arbitrary setting including the TUG3/STS3 and TUG2/VTG channels;
listing and displaying a frame structure of each channel which is included in the payload data to be inserted into the payload portion to a desired structure according to the arbitrary setting including the TUG3/STS3 and TUG2/VTG channels; and a frame structure of each channel including the generated payload data, the frame structure being set to the desired structure, in a desired mode; and
multiplexing the generated payload data and inserting the payload data into the payload portion, and adding a header portion to the payload portion to generate the desired synchronous multiplexing frame and output the generated frame to a measurement target.

According to a twelfth aspect of the present invention, there is provided a synchronous multiplexing frame generating method according to the eleventh aspect, wherein
the synchronous multiplexing frame is provided as an STM (Synchronous Transport Mode) frame of the SDH scheme or an STS (Synchronous Transport Signal) frame of the SONET scheme,
the listing and displaying is to list and display in a desired mode a frame structure of each channel in a TUG (Tributary Unit Group) 3 in the STM frame of the SDH scheme included in the generated payload data or an STS3 in the STS frame of the SONET scheme and a TUG2 in the STM frame of the SDH scheme or a VTG (Virtual Tributary Group) in the STS frame of the SONET scheme; and
the setting to the desired structure is to set the frame structure of each channel in the TUG3 in the STM frame of the SDH scheme included in the generated payload data or the STS3 in the STS frame of the SONET scheme and the TUG2 in the STM of the SDH scheme or the VTG in the STS frame of the SONET scheme to a desired structure according to the arbitrary setting.

According to a thirteenth aspect of the present invention, there is provided a synchronous multiplexing frame generating method according to the eleventh aspect, further comprising:
specifying a channel for use in measurement; and
displaying a specified channel to be identifiable from another channel, of frame structures displayed in a list for the each channel.

According to a fourteenth aspect of the present invention, there is provided a synchronous multiplexing frame generating method according to the eleventh aspect, further comprising:
displaying a process of generating the desired synchronous multiplexing frame, the displaying a process of generating comprising:
   when a payload structure setting mode is specified, displaying a bit rate setting screen capable of changing a current bit rate to a desired bit rate and set the desired bit rate;
   when processing for setting the desired bit rate terminates, displaying a main frame setting screen capable of changing a current frame structure into a desired frame structure and setting the desired frame structure within the range of bit rates at which a main frame structure for use in measurement has been set;
   when processing for setting the main frame structure terminates, displaying a measurement channel setting screen capable of arbitrarily specifying a measurement channel for use in measurement in the main frame structure by an AUG channel, a TUG3 channel, and a TUG2 channel;
   when specifying the measurement channel terminates, displaying a channel structure screen such that a list of frame structures each corresponding to a combination of the TUG3 channel and TUG2 channel is displayed, and, of the combination, a position of a measurement channel specified by the measurement channel specifying processing is displayed so as to be identified from another channel;
   displaying an edit screen capable of editing after changing a frame structure of a channel other than the measurement channel, following the displaying of the channel structure screen; and
   when processing for editing a frame structure of each channel other than the measurement channel terminates, redisplaying a channel structure screen changed by reflecting a result of the editing.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram shown for illustrating a structure of one embodiment of a synchronous multiplexing frame generating apparatus according to the present invention;
FIG. 2 is a flow chart shown for illustrating procedures for processing essential portions of the synchronous multiplexing frame generating apparatus of FIG. 1;
FIG. 3 is a view of a screen of a display shown for illustrating an operation of essential portions of the synchronous multiplexing frame generating apparatus of FIG. 1;
FIG. 4 is a view of a screen of the display shown for illustrating the operation of essential portions of the synchronous multiplexing frame generating apparatus of FIG. 1;
FIG. 5 is a view of a screen of the display shown for illustrating the operation of essential portions of the synchronous multiplexing frame generating apparatus of FIG. 1;
FIG. 6 is a view of a screen of the display shown for illustrating the operation of essential portions of the synchronous multiplexing frame generating apparatus of FIG. 1;
FIG. 7 is a view of a screen of the display shown for illustrating the operation of essential portions of the synchronous multiplexing frame generating apparatus of FIG. 1;
FIG. 8 is a view of a screen of the display shown for illustrating the operation of essential portions of the synchronous multiplexing frame generating apparatus of FIG. 1;
FIG. 9 is a view of a screen of the display shown for illustrating the operation of essential portions of the synchronous multiplexing frame generating apparatus of FIG. 1;
FIG. 10 is a view shown for illustrating a multiplexing structure of an SDH scheme defined in ITU-T G. 707; and
FIG. 11 is a view shown for illustrating a process of generating a frame of STM-1 in the SDH scheme.

Reference will now be made in detail to the presently preferred embodiments of the invention as illustrated in the accompanying drawings, in which like reference numerals designate like or corresponding parts.

Hereinafter, one embodiment of a synchronous multiplexing frame generating apparatus according to the present invention will be described with reference to the accompanying drawings.

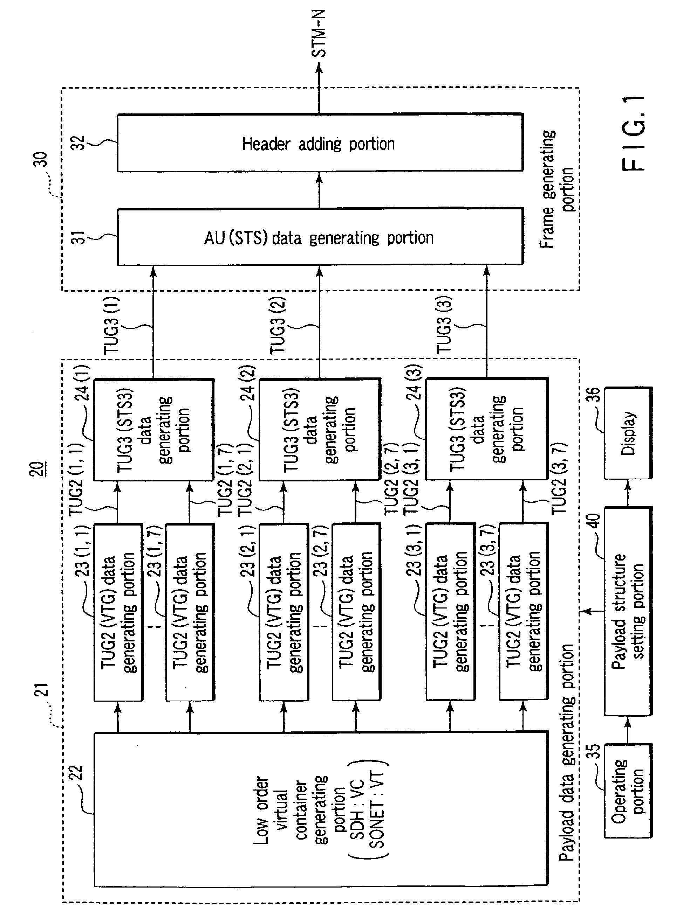

FIG. 1 is a block diagram showing a structure of a synchronous multiplexing frame generating apparatus 20 to which the present invention is applied.

The synchronous multiplexing frame generating apparatus 20 is provided as a synchronous multiplexing frame generating apparatus for generating a synchronous multiplexing frame in an SDH (Synchronous Digital Hierarchy) scheme or an SONET (Synchronous optical Network) scheme, for testing equipment for a synchronous transmission system. This apparatus comprises a payload data generating portion 21, an operating portion 35, a display 36, a payload structure setting portion 40, and a frame generating portion 30. The payload data generating portion 21 generates payload data to be inserted into a frame structure for each of TUG3/STS3 and TUG2/VTG channels in a payload portion of the synchronous multiplexing frame. The operating portion 35 is capable of arbitrarily setting a frame structure of each channel of payload data to be inserted into the payload portion, including TUG3/STS3 and TUG2/VTG channels, as an operation required for generating a desired synchronous multiplexing frame. The display 36 displays a process of generating the desired synchronous multiplexing frame. The payload structure setting portion 40 is for setting: a frame structure of each channel of payload data to be inserted into the payload portion in a desired structure according to arbitrary setting of the operating portion 35, including the TUG3/STS3 and TUG2/VTG channels; and a frame structure of each channel including payload data generated by the payload data generating portion 21 in a desired structure, including the TUG3/STS3 and TUG2/VTG channels, and further lists and displays the frame structure of each channel including payload data generated by the payload data generating portion 21, the frame structure being set to the desired structure, in a desired mode on the display 36, including the TUG3/STS3 and TUG2/VTG channels. The frame generating portion 30 multiplexes the payload data generated by the payload data generating portion 21 and inserts the multiplexed payload data into the payload portion, and adds a header portion to the payload portion to generate the desired synchronous multiplexing frame and output the frame to a measurement target.

This synchronous multiplexing frame generating apparatus 20 is characterized by being constructed to generate frame data in the SDH (or SONET) scheme and capable of using, for a measurement channel, a frame structure including a TUG2/VTG channel, for example, TUG2 in the SDH scheme, of the channels including data for the payload portion of that frame data.

That is, the synchronous multiplexing frame generating apparatus 20, as shown in FIG. 1, has the payload data generating portion 21, the frame generating portion 30, the operating portion 35, the display 36, and the payload structure setting portion 40.

The payload data generating portion 21 generates payload data targeted to be inserted into the payload portion of, for example, frame STM-N (N = 1, 4, 16, 64, 256) in the SDH scheme in accordance with a frame structure of each channel set by the operating portion 35 via the payload structure setting portion 40.

The payload data generating portion 21 has a low order virtual container generating portion 22; TUG2 data generating portions 23(1, 1) to 23(3, 7) of a 3 x 7 channel structure; and TUG3 data generating portions 24(1) to 24(3) of a 3-channel structure.

Here, in the frame structure set by the payload structure setting portion 40, the low order virtual container generating portion 22 is constructed to generate low order virtual containers VC1 and VC2 on the basis of a container C1 (composed of a container C11 of 1.544 Mb/s and a container C12 of 2.048 Mb/s), each of which contains low speed frame data and a container C2 (6.312 Mb/s), and to output these VC1 and VC2 to each of the TUG2 data generating portions 23 (1, 1) to 23 (3, 7) .

Each of the TUG2 data generating portions 23(1, 1) to 23(3, 7) is provided by 3 x 7 channels, for the purpose of preparation for the case where there has been specified a frame structure for generating a high order virtual container VC4 by collecting, by 3 channels, TUG3 data obtained by collecting 7 channels, of TUG2 by means of the operating portion 35 via the payload structure setting portion 40. These generating portions each are constructed to generate TUG2 data upon the receipt of a low order virtual container.

As has been described above, in the case where there has been specified a frame structure for generating the high order virtual container VC4 by collecting, by 3 channels, TUG3 data obtained by collecting 7 channels, of TUG2 by means of the operating portion 35 via the payload structure setting portion 40, a first 7 channels generated by the TUG3 data generating portions 23(1, 1) to 23(1, 7), TUG2 data for 7 channels, are inputted to the TUG3 data generating portion 24(1), and the inputted TUG2 data are outputted collectively as TUG3(1) data for a first channel.

In addition, a second generated by the TUG2 data generating portions 23(2, 1) to 23(2, 7), TUG2 data for 7 channels, are inputted to the TUG3 data generating portion 24(2), and the inputted TUG2 data are outputted collectively as TUG3(2) data for a second channel.

Further, a third generated by the TUG2 data generating portions 23(3, 1) to 23(3, 7), TUG2 data for 7 channels, are inputted to the TUG3 data generating portion 24(3), and the inputted TUG2 data are outputted collectively as TUG3(3) data for a third channel.

Moreover, in the case where a frame structure using a virtual container VC3 which is added a POH (Path Overhead) to a container C3 (44.736 Mb/s or 34.368 Mb/s) has been specified for any one of three channels, of TUG3, a TUG3 data generating portion 24 corresponding to that channel is constructed to output TUG3 data set in advance in the TUG3 data generating portion 24 without using TUG2 data.

These 3-channel data TUG3(1) to TUG3(3) are inputted to an AU data generating portion 31 of the frame generating portion 30.

The AU data generating portion 31 is constructed to generate a virtual container VC4 by adding a POH (path overhead) to a collection of 3-channel data TUG3(1) to TUG3(3); and to generate 1 set of AU4 data by adding an AU pointer indicating a storage position of a frame to the virtual container VC4 so as to output the generated data to a header adding portion 32 in the frame generating portion 30.

The header adding portion 32 is constructed to complete a frame of a desired STM-N frame set by means of the operating portion 35 via the payload structure setting portion 40 by adding an SOH (section overhead) to AUG1 data composed of such one set of AU4 data, or alternatively, AUG-N data obtained by collecting the AUG1 data by a plurality of channels; and to output the completed frame to a measurement target, although not shown, at a bit rate determined by N (N denotes 1, 4, 16, 64, or 256).

In the case where N is equal to or greater than 4, the header adding portion 32 N-multiplexes the same AUG1 data.

The foregoing is provided as an example in the case where a desired frame structure via AU4 is generated. However, even in the case of a frame structure via AU3, a desired frame structure can be generated similarly.

In this case, the above-described AU4, VC4 and TUG3 are replaced with "AU3" and "VC3", and N of a frame of STM-N completed at this time is any one of 0, 1, 4, 16, 64, and 256.

On the other hand, the payload structure setting portion 40 is constructed to cause the display 36 to list and display a frame structure of each channel which includes a channel of TUG3 or less, of the payload data generated by the payload generating portion 21, and to set arbitrarily the frame structure of each channel by an operation of the operating portion 35.

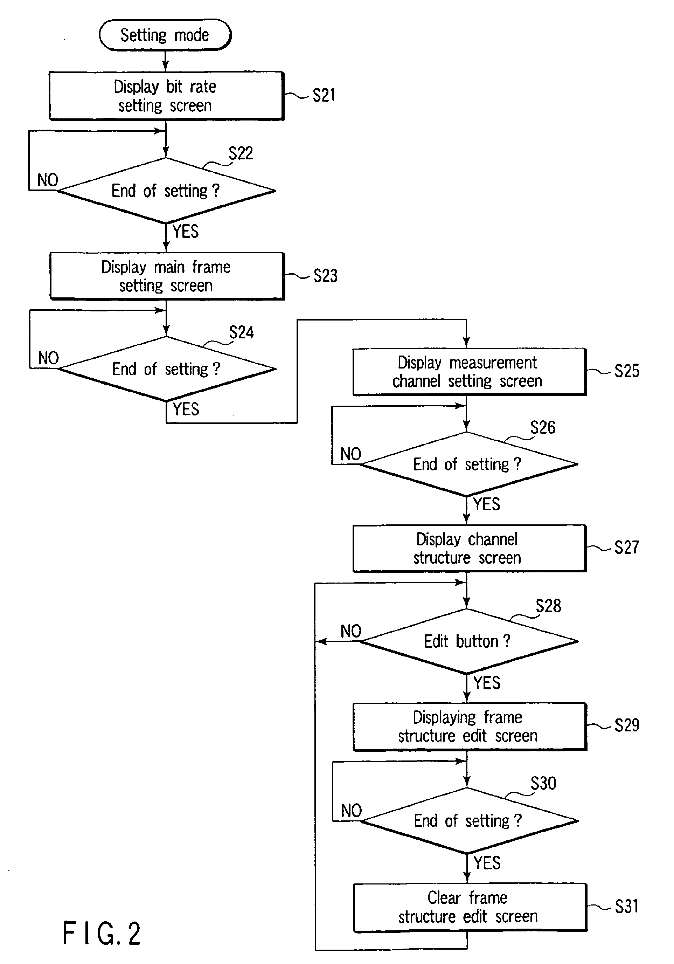

FIG. 2 is a flow chart showing procedures of processing this payload structure setting portion 40.

Hereinafter, an operation of the synchronous multiplexing frame generating apparatus 20 according to the present embodiment will be described with reference to the flow chart.

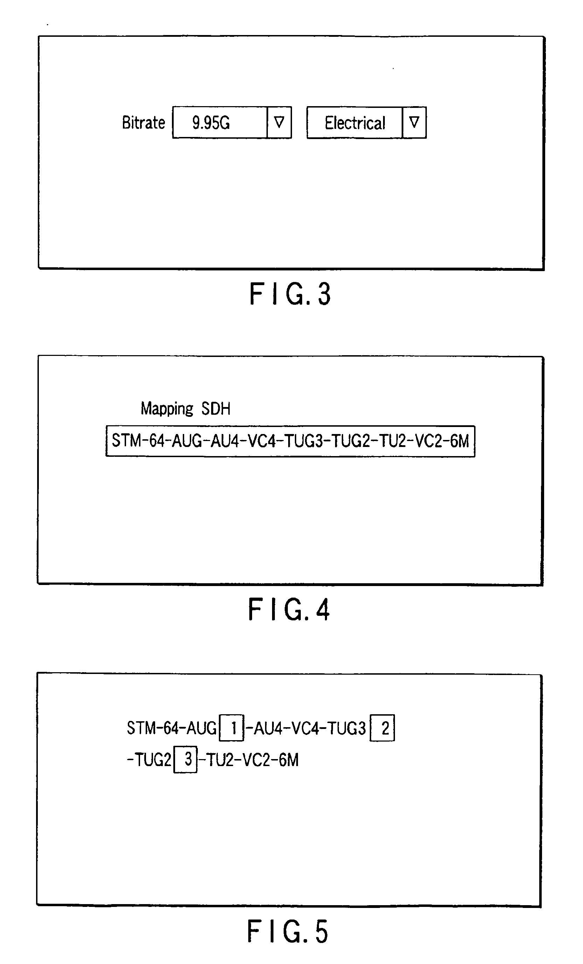

First, when a payload structure setting mode is specified by an operation of the operating portion 40, for example, a bit rate setting screen as shown in FIG. 3 is displayed on the display 36 (step S21).

On this bit rate setting screen, a current bit rate value (9.95G) displayed in a bit rate display field can be set to be changed at a predetermined bit rate by an operation of the operating portion 35. In addition, it is possible to select whether to output electrical frame data or optical frame data.

When this bit rate setting process terminates, for example, a main frame setting screen for setting a main frame structure for use in measurement is displayed on the display 36, as shown in FIG. 4 (steps S22 and S23).

On this main frame setting screen, a current main frame (STM-64-AUG-AU4-TUG3-TUG2-TU2-VC2-6M: wherein 6M corresponds to the container C2) displayed in that display field can be set to be changed into a desired frame structure within the range of bit rates set in the step S21.

When this main frame setting process terminates, for example, a measurement channel setting screen for specifying a main channel for use in measurement in the main frame structure is displayed on the display 36, as shown in FIG. 5 (steps S24 and S25).

In the current main frame structure (STM-64-AUG-AU4-TUG3-TUG2-TU2-VC2-6M) displayed in that display field, this measurement channel can be arbitrarily specified with respect to an AUG channel (set to 1 as a current value), a TUG3 channel (a current value is 2), and a TUG2 channel ((a current value is 3), by an operation of the operating portion 35.

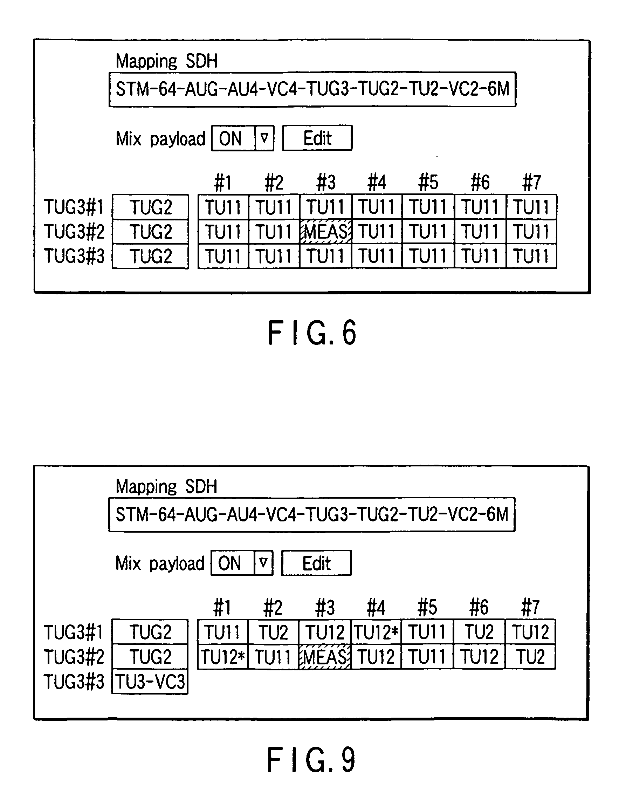

When specification the measurement channel terminates, for example, a channel structure screen is displayed on the display 36, as shown in FIG. 6 (steps S26 and S27).

On this channel structure screen, in addition to the previously described main frame structure (STM-64-AUG-AU4-TUG3-TUG2-TU2-VC2-6M), a list of frame structures each corresponding to a combination of TUG3 channels #1, #2 and #3 and TUG2 channels #1, #2, #3, #4, #5, #6 and #7 (in this case, TU11 is set excluding a measurement channel) is displayed in a table format. In addition, a position of a measurement channel specified by processing for specifying the measurement channel, of these combinations, is displayed (as characters "MEAS" representing "measurement" in an example of FIG. 6) so that the position can be identified from that of another channel.

Although not shown in the flow chart of FIG. 2, in the case where a frame structure of each TUG3 and TUG2 is used as the same that of the main frame structure, "ON" in the display field following "Mix payload" in the example of FIG. 6 may be changed to "OFF" by an operation of the operating portion 35.

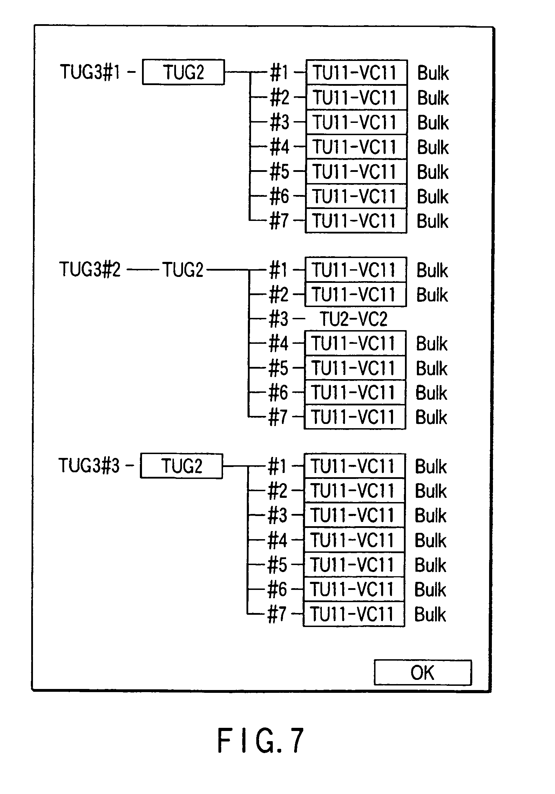

Further, on this channel structure screen, when an edit button indicated by "Edit" is selectively operated by the operating portion 35, for example, an edit screen for changing a frame structure of a non-measurement channel (background) other than the measurement channel, is displayed on the display 36, as shown in FIG. 7 (steps S28 and S29).

On this edit screen, a display "Bulk" indicating that predetermined data specified in advance corresponding to a frame structure is made on a frame structure display portion for each non-measurement channel (background) other than the measurement channel.

That is, a current display on this edit screen indicates a case in which the TUG3 channel #1 is specified including TUG2 channels #1 (TU11-VC11), #2 (TU11-VC11), #3 (TU11-VC11), #4 (TU11-VC11), #5 (TU11-VC11), #6 (TU11-VC11), and #7 (TU11-VC11); the TUG3 channel #2 is specified including TUG2 channels #1 (TU11-VC11), #2 (TU11-VC11), #3 (TU2-VC2, here, #3 denotes a measurement channel), #4 (TU11-VC11), #5 (TU11-VC11), #6 (TU11-VC11), and #7 (TU11-VC11); and the TUG3 channel #3 is specified including TUG2 channels #1 (TU11-VC11), #2 (TU11-VC11), #3 (TU11-VC11), #4 (TU11-VC11), #5 (TU11-VC11), #6 (TU11-VC11), and #7 (TU11-VC11).

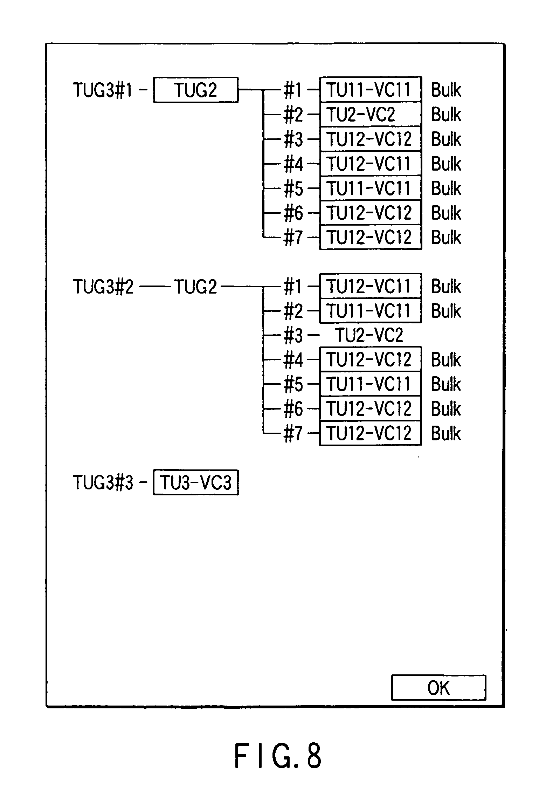

A frame structure of each channel other than the measurement channels can be set to be arbitrarily changed as shown in FIG. 8, for example, by an operation of the operating portion 35.

That is, the edit screen displayed after this change indicates a case in which the TUG3 channel #1 is specified including TUG2 channels #1 (TU11-VC11), #2 (TU11-VC11), #3 (TU11-VC11), #4 (TU11-VC11), #5 (TU11-VC11), #6 (TU11-VC11), #7 (TU11-VC11); and the TUG2 channel #2 is specified including TUG2 channels #1 (TU11-VC11), #2 (TU11-VC11), #3 (TU2-VC2, here, #3 denotes a measurement channel), #4 (TU12-VC12), #5 (TU11-VC11), #6 (TU12-VC12), and #7 (TU2-VC2), and further including the TUG3 channel #3 and a TU3-VC3.

When processing for changing a frame structure of each channel other than the measurement channels terminates, the edit screen is cleared (steps S30 and S31), and the channel structure screen shown in FIG. 6 is restored.

However, at this time, a frame structure for each channel other than the measurement channel is changed by reflecting the previously described edit result, as shown in FIG. 9.

That is, on this channel structure screen after the edit, in addition to the previously described main frame structure (STM-64-AUG-AU4-TUG3-TUG2-TU2-VC2-6M), a list of frame structures is displayed in a table format, each of which corresponds to a combination of the TUG3 channel #1 and its, TUG2 channel #1 (TU11), #2 (TU2), #3 (TU12), #4 (TU12*), #5 (TU11), #6 (TU2), #7 (TU12); and the TUG3 channel #2 and its TUG2 channels #1 (TU12*), #2 (TU11), #3 (measurement channel: MEAS), #4 (TU12), #5 (TU11), #6 (TU12), #7 (TU12); and the TUG3 channel #3 and its TU3-VC3.

In this manner, after a frame structure for each channel has been set, the payload generating portion 21 generates each item of payload data targeted to be inserted into a payload portion and outputs the generated payload data to the frame generating portion 30 in accordance with the content finally displayed on the channel structure screen.

Then, from the frame generating portion 30, the frame data obtained by inserting into the payload portion the data for each channel multiplexed in the frame structure displayed on the channel structure screen is delivered to a measurement target at a specified bit rate.

Data required for measurement in the payload generating portion 21 is inserted into a measurement channel of this frame data. By providing this frame data to equipment targeted for measurement, testing of an operation for data with different frame structures of each channel can be carried out.

In addition, in the flow chart of FIG. 2, the next screen has been displayed by one waiting for operations of setting processing and editing processing by the operating portion 35 in order to clarify an explanation. However, in more detail, a structure is provided so that the previous screen can be sequentially returned by an operation of the operating portion 35, and the contents of settings of the previous screen can be arbitrarily changed.

In this manner, the synchronous multiplexing frame generating apparatus 20 according to the present embodiment is constructed to list and display a frame structure of each channel including a TUG2 channel in which the payload data generated by the payload generating portion 21 is included on the screen of the display 36, and arbitrarily change and set such a frame structure.

Thus, the frame structure of each channel including a TUG2 channel can be easily understood, operation and testing of equipment for a frame of the SDH scheme which is different in frame structure of each channel can be carried out, and more practical testing can be performed.

Moreover, a position of a measurement channel can be displayed to be identifiable from another channel in such listing display. Thus, a TUG2 measurement channel can be clearly understood, and a channel can be precisely specified for equipment for a synchronous transmission system targeted for measurement.

In the present embodiment, a description has been given with respect to a case of generating a frame of the SDH scheme. However, the present invention can be applied similarly to a case of generating a frame of the SONET scheme equivalent to that of the SDH frame.

In this case, for example, the TUG3, TUG2, and AU pointer in the case of generating the STM-N frame of the SDH scheme described above may be replaced with "STS3", "VTG", and "STS pointer" in the case of generating the STS frame of the SONET scheme, respectively.

As has been described above, the synchronous multiplexing frame generating apparatus according to the present invention is constructed to list and display on a display screen a frame structure of each channel including payload data generated by a payload generating portion, and arbitrarily change and set such a frame structure including TUG3 and TUG2 channels.

In this way, the frame structure of each channel including TUG3 and TUG2 channels can be easily understood, and operation and testing of equipment for a synchronous transmission system targeted for measurement with respect to a synchronous multiplexing frame which has different frame structures for each channel, including TUG3 and TUG2 channels, can be carried out, thus more practical testing can be performed.

In addition, the position of a measurement channel in such listing display is displayed to be identifiable from another channel. Thus, a TUG2 measurement channel can be clearly grasped, and a channel can be precisely specified for equipment for a synchronous transmission system targeted for measurement.

## Claims

1. A synchronous multiplexing frame generating apparatus for generating a synchronous multiplexing frame in an SDH scheme or an SONET scheme, for testing equipment for a synchronous transmission system, the apparatus comprising:
a payload data generating portion (21) adapted to generate payload data to be inserted into a frame structure for each of a TUG3/STS3 channel and a TUG2/VTG channel at a payload portion of the synchronous multiplexing frame,
**characterized by** further comprising:
an operating portion (35) capable of arbitrarily specifying a desired frame structure of each channel which is included in the payload data to be inserted into the payload portion, including TUG3/STS3 and TUG2/VTG channels;
a display (36) which is adapted to display a process of generating the desired synchronous multiplexing frame;
a payload structure setting portion (40) which is adapted to set: a frame structure of each channel which is included in the payload data to be inserted into the payload portion according to the desired structure specified by the operating portion (35), including the TUG3/STS3 and TUG2/VTG channels; and to list and display the frame structure of each channel which is included in the payload data generated by the payload data generating portion, including the TUG3/STS3 and TOG2/VTG channels, set to the desired structure, in a desired mode on the display; and
a frame generating portion (30) which is adapted to multiplex the payload data generated by the payload data generating portion (21) and to insert the payload data into the payload portion, and to add a header portion to the payload portion to generate the desired synchronous multiplexing frame and to output the generated frame to a measurement target.

2. A synchronous multiplexing frame generating apparatus according to claim 1, wherein the synchronous multiplexing frame is provided as an STM frame of the SDH scheme or an STS frame of the SONET scheme,
wherein the payload structure setting portion (40) is adapted to list and display in a desired mode on the display (36) a frame structure of each channel in a TUG3 in the STM frame of the SDH scheme which is included in the payload data generated by the payload data generating portion (21) or an STS3 in the STS frame of the SONET scheme and a TUG2 in the STM frame of the SDH scheme or a VTG in the STS frame in the SONET scheme, and
a frame structure of each channel in the TUGS in the STM frame in the SDH scheme which is included in the payload data generated by the payload data generating portion (21) or the STS3 in the STS frame of the SONET scheme and the TUG2 in the STM of the SDH scheme or the VTG in the STS of the SONET scheme can be set to the desired structure specified by the operating portion (35).

3. A synchronous multiplexing frame generating apparatus according to claim 1, wherein
the payload structure setting portion (40) has measurement channel specifying means for specifying a channel for use in measurement according to the desired structure specified by the operating portion (35), and
a channel specified by the measurement channel specifying means is displayed to be identifiable from another channel, of frame structures displayed in a list for each channel on the display (36).

4. A synchronous multiplexing frame generating apparatus according to claim 2, wherein
the synchronous multiplexing frame is provided as an STM frame in the SDH scheme or an STS frame in the SONET scheme, and
the payload data generating portion (21) has:
a low order virtual container generating portion (22) which is adapted to generate a low order virtual container in the STM frame of the SDH scheme or in the STS frame of the SONET scheme; TUG2 or VTG data generating portions (23(1, 1) to 23(3, 7)) each having a 3 x 7 channel structure, each of which generates TUG2 data in the STM frame of the SDH scheme or a VTG data in the STS frame of the SONET scheme; and TUS3 or STS3 data generating portions (24(1) to (24(3)) each having 3 channel structures for generating TUGS data in the STM frame of the SDH scheme or STS3 data in the STS frame of the SONET scheme.

5. A synchronous multiplexing frame generating apparatus according to claim 4, wherein the low order virtual container generating portion (22) is constructed to, in accordance with the frame structure set by the payload structure setting portion (40) in the case of generating a low order virtual container (VC11, VC12, VC2) in the STM frame of the SDH scheme, generate low order virtual containers VC1 and VC2 based on a container C1, composed of a container C11 of 1.544 Mb/s and a container C12 of 2.048 Mb/s, having contained therein low speed frame data and a container C2 (6.312 Mb/s) and output these VC1 (VC11, VC12) and VC2 to each of the TUG2 data generating portions (23(1, 1) to 23(3, 7)).

6. A synchronous multiplexing frame generating apparatus according to claim 5, wherein each of the TUG2 data generating portions (23(1, 1) to 23(3, 7)) is constructed to provide, by 3 x 7 channels, while collecting, by 3 channels, TUG3 data (TUG3(1)-TUG3(3)) obtained by collecting 7 channels (TUG2 (1, 1)-TUG2(1, 7), TUG2 (2, 1)-TUG2 (2, 7), TUG2(3, 1)-TUG2(3, 7)) of TUG2 by means of the operating portion (35) via the payload structure setting portion (40) for the purpose of preparation for a case in which there has been specified a frame structure for generating a high order virtual container VC4, and to generate TUG2 data for the 3 x 7 channel upon the receipt of the low order virtual container by multiplexing TU1 data only after generating TU1 and TU2 and by adding a TU pointer.

7. A synchronous multiplexing frame generating apparatus according to claim 6, wherein, in the case where there has been specified a frame structure for generating a high order virtual container VC4 while collecting, by 3 channels, TUGS data obtained by collecting 7 channels of TUG2 by means of the operating portion (35) via the payload structure setting portion (40), TUG2 data for 3 x 7 channels generated by the TUG2 data generating portions (23(1, 1) to 23(3, 7)) are inputted to the TUG3 data generating portions (24 (1) to 24(3)) by 7 channels, the inputted data is collected as TUG3(1) to TUG3(3) data for 3 channels, and the collected data is outputted to the frame generating portion (30).

8. A synchronous multiplexing frame generating apparatus according to claim 6, wherein, in the case where there has been specified a frame structure using a low order virtual container VC3 which is added a POH to a container C3 (44.736 Mb/s or 34.368 Mb/s) for any one of 3 channels of TUG3 by means of the operating portion (35) via the payload structure setting portion (40), a TUG3 data generating portion corresponding to a channel specified in the TUG3 data generating portions (24(1) to 24(3)) of the 3 channels is constructed to output to the frame generating portion (30) TUG3 data from the TUG3 data generating portion (24) as the TUG3 data by generating TU3 data to add a TU pointer to a low order virtual container VC3 generated by the low order virtual container generating portion (22) without using the TUG2 data.

9. A synchronous multiplexing frame generating apparatus according to claim 7, wherein
the frame generating portion (30) has an AU data generating portion (30) and a header adding portion (32),
data TUG3(i) to TUG3(3) for 3 channels are inputted to the AU data generating portion (31),
the AU data generating portion (31) is adapted to generate a high order virtual container VC4 by adding a POH to a collection of data TUG3(1) to TUG3(3) for 3 channels, and to generate one set of AU4 data by adding an AU pointer indicating an insert position of a frame to the virtual container VC4, thereby outputting the generated data to the header adding portion (32), and
the header adding portion (32) is constructed to complete a desired STM-N frame set by means of the operating portion (35) via the payload structure setting portion (40) by adding an SOH to AUG-1 data composed of the one set of AU4 data or AUG-N (N: 4, 16, 64, 256) data obtained by collecting the AUG1 data by a plurality of channels, thereby outputting the completed frame at a bit rate determined depending on N , N being any one of 1, 4, 16, 64, and 256.

10. A synchronous multiplexing frame generating apparatus according to claim 9, wherein the header adding portion (32) is adapted to N-multiplex same AUG1 data in the case where the N is equal to or greater than 4.

11. A synchronous multiplexing frame generating method for generating a synchronous multiplexing frame in an SDH scheme or an SONET scheme, for testing equipment for a synchronous transmission system, the method comprising:
generating payload data to be inserted into a frame structure for each of a TUG3/STS3 channel and a TUG2/VTG channel at a payload portion of the synchronous multiplexing frame,
**characterized by** further comprising:
arbitrarily specifying a desired frame structure of each channel which is included in the payload data to be inserted into the payload portion including TUG3/STS3 and TUG2/VTG channels;
setting a frame structure of each channel of the payload data to be inserted into the payload portion to the desired structure arbitrarily specified including the TUG3/STS3 and TUG2/VTG channels;
listing and displaying the frame structure of each channel which is included in the payload data to be inserted into the payload portion set to the desired structure including the TUG3/STS3 and TUG2/VTG channels, in a desired mode; and
multiplexing the generated payload data and inserting the payload data into the payload portion, and adding a header portion to the payload portion to generate the desired synchronous multiplexing frame and output the generated frame to a measurement target.

12. A synchronous multiplexing frame generating method according to claim 11, wherein
the synchronous multiplexing frame is provided as an STM frame of the SDH scheme or an STS frame of the SONET scheme,
the listing and displaying is to list and display in a desired mode a frame structure of each channel in a TUG3 in the STM frame of the SDH scheme which is included in the generated payload data or an STS3 in the STS frame of the SONET scheme and a TUG2 in the STM frame of the SDH scheme or a VTG in the STS frame of the SONET scheme; and
the setting to the desired structure is to set the frame structure of each channel in the TUGS in the STM frame of the SDH scheme included in the generated payload data or the STS3 in the STS frame of the SONET scheme and the TUG2 in the STM of the SDH scheme or the VTG in the STS frame of the SONET scheme to a desired structure according to the arbitrary setting.

13. A synchronous multiplexing frame generating method according to claim 11, further comprising:
specifying a channel for use in measurement; and
displaying a specified channel to be identifiable from another channel, of frame structures displayed in list for the each channel.

14. A synchronous multiplexing frame generating method according to claim 11, further comprising:
displaying a process of generating the desired synchronous multiplexing frame, the displaying a process of generating comprising:
when a payload structure setting mode is specified, displaying a bit rate setting screen capable of changing a current bit rate to a desired bit rate and set the desired bit rate;
when processing for setting the desired bit rate terminates, displaying a main frame setting screen capable of changing a current frame structure into a desired frame structure and setting the desired frame structure within the range of bit rates at which a main frame structure for use in measurement has been set;
when processing for setting the main frame structure terminates, displaying a measurement channel setting screen capable of arbitrarily specifying a measurement channel for use in measurement in the main frame structure by an AUG channel, a TUG3 channel, and a TUG2 channel;
when specifying the measurement channel terminates, displaying a channel structure screen such that a list of frame structures each corresponding to a combination of the TUG3 channel and TUG2 channel is displayed, and, of the combination, a position of a measurement channel specified by the measurement channel specifying processing is displayed so as to be identified from another channel;
displaying an edit screen capable of editing after changing a frame structure of a channel other than the measurement channel, following the displaying of the channel structure screen; and
when processing for editing a frame structure of each channel other than the measurement channel terminates, redisplaying a channel structure screen changed by reflecting a result of the editing.

## Patentansprüche

1. Synchronmultiplexierungsrahmengenerierungsvorrichtung zum Generieren eines Synchronmultiplexierungsrahmens in einem SDH-Schema oder einem SONET-Schema, zum Testen von Geräten für ein synchrones Übertragungssystem, wobei die Vorrichtung umfasst:
einen Nutzdatengenerierungsabschnitt (21), der dazu ausgelegt ist, Nutzdaten zu generieren, die in eine Rahmenstruktur jeweils eines TUG3/STS3-Kanals und eines TUG2/VTG-Kanals an einem Nutzlastabschnitt des Synchronmultiplexierungsrahmens eingesetzt werden sollen,
**dadurch gekennzeichnet, dass** sie darüber hinaus umfasst:
einen Betriebsabschnitt (35), der in der Lage ist, eine gewünschte Rahmenstruktur von jedem Kanal, der in den Nutzdaten enthalten ist, die in den Nutzlastabschnitt eingesetzt werden sollen, einschließlich TUG3/STS3- und TUG2/VTG-Kanälen, beliebig vorzugeben;
eine Anzeige (36), die dazu ausgelegt ist, einen Generierungsprozess des gewünschten Synchronmultiplexierungsrahmens anzuzeigen;
einen Nutzlaststruktureinstellrahmen (40), der dazu ausgelegt ist, die Rahmenstruktur von jedem Kanal, der in den Nutzdaten enthalten ist, die in den Nutzlastabschnitt eingesetzt werden sollen, entsprechend der durch den Betriebsabschnitt (35) gewünschten Struktur, einschließlich TUG3/STS3- und TUG2/VTG-Kanälen, einzustellen; und die Rahmenstruktur jedes Kanals, der in den durch den Nutzdatengenerierungsabschnitt generierten Nutzdaten enthalten ist, einschließlich TUG3/STS3- und TUG2/VTG-Kanälen, die auf die gewünschte Struktur eingestellt sind, in einer gewünschten Betriebsart auf der Anzeige aufzulisten und anzuzeigen; und
einen Rahmengenerierungsabschnitt (30), der dazu ausgelegt ist, die durch den Nutzdatengenerierungsabschnitt (21) generierten Nutzdaten zu multiplexieren und die Nutzdaten in den Nutzlastabschnitt einzusetzen, und einen Anfangsblockabschnitt dem Nutzlastabschnitt hinzuzufügen, um den gewünschten Synchronmultiplexierungsrahmen zu generieren und den generierten Rahmen an ein Messziel auszugeben.

2. Synchronmultiplexierungsrahmengenerierungsvorrichtung nach Anspruch 1, wobei der Synchronmultiplexierungsrahmen als ein STM-Rahmen des SDH-Schemas oder als ein STS-Rahmen des SONET-Schemas vorgesehen ist,
wobei der Nutzlaststruktureinstellabschnitt (40) dazu ausgelegt ist, eine Rahmenstruktur von jedem Kanal in einem TUG3 im STM-Rahmen des SDH-Schemas, der in den durch den Nutzdatengenerierungsabschnitt (21) generierten Nutzdaten oder in einem STS3 im STS-Rahmen des SONET-Schemas und einem TUG2 im STM-Rahmen des SDH-Schemas, oder einem VTG im STS-Rahmen im SONET-Schema enthalten ist, in einer gewünschten Betriebsart auf der Anzeige (36) aufzulisten und anzuzeigen, und
eine Rahmenstruktur jedes Kanals in den TUGS im STM-Rahmen im SDH-Schema, die in den durch den Nutzdatengenerierungsabschnitt (21) oder dem STS3 im STS-Rahmen des SONET-Schemas und dem TUG2 im STM des SDH-Schemas, oder dem VTG im STS des SONET-Schemas enthalten ist, auf die durch den Betriebsabschnitt (35) vorgegebene gewünschte Struktur eingestellt werden kann.

3. Synchronmultiplexierungsrahmengenerierungsvorrichtung nach Anspruch 1, wobei
der Nutzlaststruktureinstellabschnitt (40) Messkanalvorgabeeinrichtungen umfasst, um einen Kanal zur Verwendung beim Messen vorzugeben, welcher der durch den Betriebsabschnitt (35) vorgegebenen gewünschten Struktur entspricht, und
ein durch die Messkanalvorgabeeinrichtungen aus Rahmenstrukturen, die in einer Liste für jeden Kanal auf der Anzeige (36) angezeigt werden, vorgegebener Kanal von einem anderen Kanal aus identifizierbar angezeigt wird.

4. Synchronmultiplexierungsrahmengenerierungsvorrichtung nach Anspruch 2, wobei
der Synchronmultiplexierungsrahmen als ein STM-Rahmen im SDH-Schema oder ein STS-Rahmen im SONET-Schema vorgesehen ist, und
der Nutzdatengenerierungsabschnitt (21) besitzt:
einen niederwertigen virtuellen Containergenerierungsabschnitt (22), der dazu ausgelegt ist, einen niederwertigen virtuellen Container im STM-Rahmen des SDH-Schemas oder im STS-Rahmen des SONET-Schemas zu generieren; TUG2-oder VTG-Datengenerierungsabschnitte (23(1, 1) bis 23(3, 7)), die jeweils eine 3 x 7-Kanalstruktur haben, wovon jeder TUG2-Daten im STM-Rahmen des SDH-Schemas oder ein VTG-Datenelement im STS-Rahmen des SONET-Schemas generiert; und TUS3- oder STS3-Datengenerierungsabschnitte (24(1) bis 24(3), die jeweils 3-Kanalstrukturen haben, um TUGS-Daten im STM-Rahmen des SDH-Schemas oder STS3-Daten im STS-Rahmen des SONET-Schemas zu generieren.

5. Synchronmultiplexierungsrahmengenerierungsvorrichtung nach Anspruch 4, wobei der niederwertige virtuelle Containergenerierungsabschnitt (22) dazu aufgebaut ist, in Übereinstimmung mit der durch den Nutzlaststruktureinstellabschnitt (40) eingestellten Rahmenstruktur im Fall des Generierens eines niederwertigen virtuellen Containers (VC11, VC12, VC2) im STM-Rahmen des SDH-Schemas niederwertige virtuelle Container VC1 und VC2 auf Grundlage eines Containers C1 zu generieren, der sich aus einem Container C11 mit 1,544 Mb/s und einem Container C12 mit 2,048 Mb/s, die in sich langsame Rahmendaten enthalten, und einem Container C2 (6,312 Mb/s) zusammensetzt, und diese VC1 (VC11, VC12) und VC2 jeweils an die TUG2-Datengenerierungsabschnitte (23(1, 1) bis 23(3, 7)) auszugeben.

6. Synchronmultiplexierungsrahmengenerierungsvorrichtung nach Anspruch 5, wobei jeder der TUG2-Datengenerierungsabschnitte (23(1, 1) bis 23(3, 7)) dazu aufgebaut ist, durch 3 x 7 Kanäle, beim Erfassen durch 3 Kanäle, TUG3-Daten (TUG3(1)-TUG3(3)) bereitzustellen, die durch Erfassen von 7 Kanälen (TUG2(1, 1) - TUG2(1, 7), TUG2(2, 1) - TUG2(2, 7), TUG2(3, 1) - TUG2(3, 7)) von TUG2 mittels des Betriebsabschnitts (35) über den Nutzlaststruktureinstellabschnitt (40) zu Zwecken einer Vorbereitung für einen Fall bereitzustellen, bei dem eine Rahmenstruktur zum Generieren eines hochwertigen virtuellen Containers VC4 vorgegeben wurde, und um TUG2-Daten für die 3 x 7 Kanäle beim Empfang des niederwertigen virtuellen Containers zu generieren, indem TU1-Daten nur nach dem Generieren von TU1 und TU2 multiplexiert werden, und indem ein TU-Zeiger hinzugefügt wird.

7. Synchronmultiplexierungsrahmengenerierungsvorrichtung nach Anspruch 6, wobei in dem Fall, dass eine Rahmenstruktur zum Generieren eines hochwertigen virtuellen Containers VC4 beim Erfassen durch 3 Kanäle vorgegeben wurde, TUGS-Daten, die durch Erfassen von 7 Kanälen von TUG2 mittels des Betriebsabschnitts (35) über den Nutzlaststruktureinstellabschnitt (40) erhalten werden, TUG2-Daten für 3 x 7 Kanäle, die durch die TUG2-Datengenerierungsabschnitte (23(1,2) bis 23(3, 7)) generiert werden, in die TUG3-Datengenerierungsabschnitte (24(1) bis 24(3)) durch 7 Kanäle eingegeben werden, die eingegebenen Daten als TUG3(1) bis TUG3(3) für 3 Kanäle erfasst werden, und die erfassten Daten an den Rahmengenerierungsabschnitt (30) ausgegeben werden.

8. Synchronmultiplexierungsrahmengenerierungsvorrichtung nach Anspruch 6, wobei in dem Fall, dass eine Rahmenstruktur vorgegeben wurde, die einen niederwertigen virtuellen Container VC3 verwendet, dem ein POH zu einem Container C3 (44,736 Mb/s oder 34,368 Mb/s) für irgendeinen von 3 Kanälen von TUG3 mittels des Betriebsabschnitts (35) über den Nutzlaststruktureinstellabschnitt (40) hinzugefügt wird, ein TUG3-Datengenexierungsabschnitt, der einem in den TUG3-Datengenerierungsabschnitten (24(1) bis 24(3)) vorgegebenen Kanal der 3 Kanäle entspricht, so aufgebaut ist, dass an den Rahmengenerierungsabschnitt (30) TUG3-Daten aus dem TUG3-Datengenerierungsabschnitt (24) als TUG3-Daten ausgegeben werden, indem TU3-Daten generiert werden, um einen TU-Zeiger zu einem niederwertigen virtuellen Container VC3 hinzuzufügen, der durch den niederwertigen virtuellen Containergenerierungsabschnitt (22) generiert wird, ohne die TUG2-Daten zu verwenden.

9. Synchronmultiplexierungsrahmengenerierungsvorrichtung nach Anspruch 7, wobei
der Rahmengenerierungsabschnitt (30) einen AU-Datengenerierungsabschnitt (30) und einen Anfangsblockhinzufügeabschnitt (32) umfasst,
Daten TUG3(1) bis TUG3(3) für 3 Kanäle in den AU-Datengenerierungsabschnitt (31) eingegeben werden,
der AU-Datengenerierungsabschnitt (31) dazu ausgelegt ist, einen hochwertigen virtuellen Container VC4 zu generieren, indem ein POH zu einer Erfassung von Daten TUG3(1) bis TUG3(3) für 3 Kanäle hinzugefügt wird, und einen Satz von AU4-Daten zu generieren, indem ein AU-Zeiger hinzugefügt wird, der eine Einsetzposition eines Rahmens in den virtuellen Container VC4 angibt, wodurch die generierten Daten an den Anfangsblockhinzufügeabschnitt (32) ausgegeben werden, und
der Anfangsblockhinzufügeabschnitt (32) dazu aufgebaut ist, einen gewünschten STM-N-Rahmen zu vervollständigen, der mittels des Betriebsabschnitts (35) über den Nutzlaststruktureinstellabschnitt (40) eingestellt wird, indem ein SOH zu AUG-1-Daten hinzugefügt wird, die sich aus dem einen Satz von AU4-Daten oder AUG-N-Daten (N: 4, 16, 64, 256) zusammensetzen, die durch Erfassen der AUG-1-Daten durch mehrere Kanäle erhalten werden, wobei der vervollständigte Rahmen mit einer Bitrate ausgegeben wird, die in Abhängigkeit von N bestimmt wird, wobei N eine beliebige Zahl 1, 4, 16, 64 oder 256 ist.

10. Synchronmultiplexierungsrahmengenerierungsvorrichtung nach Anspruch 9, wobei der Anfangsblockhinzufügeabschnitt (32) dazu ausgelegt ist, dieselben AUG1-Daten im Falle, dass N größer oder gleich 4 ist, N-mal zu multiplexieren.

11. Synchronmultiplexierungsrahmengenerierungsverfahren zum Generieren eines Synchronmultiplexierungsrahmens in einem SDH-Schema oder einem SONET-Schema, zum Testen von Geräten für ein synchrones Übertragungssystem, wobei das Verfahren umfasst:
Generieren von Nutzdaten, die in eine Rahmenstruktur jeweils eines TUG3/STS3-Kanals und eines TUG2/VTG-Kanals an einem Nutzlastabschnitt des Synchronmultiplexierungsrahmens eingesetzt werden sollen,
**dadurch gekennzeichnet, dass** es darüber hinaus umfasst:
beliebiges Vorgeben einer gewünschten Rahmenstruktur von jedem Kanal, der in den Nutzdaten enthalten ist, die in den Nutzlastabschnitt eingesetzt werden sollen, einschließlich TUG3/STS3- und TUG2/VTG-Kanälen;
Einstellen der Rahmenstruktur von jedem Kanal der Nutzdaten, die in den Nutzlastabschnitt eingesetzt werden sollen, auf die beliebig vorgegebene gewünschte Struktur, einschließlich der TUG3/STS3- und TUG2/VTG-Kanäle;
Auflisten und Anzeigen der Rahmenstruktur von jedem Kanal, der in den in den Nutzlastabschnitt einzusetzenden Nutzdaten enthalten ist, der auf die gewünschte Struktur eingestellt ist, einschließlich der TUG3/STS3- und TUG2/VTG-Kanäle, in einer gewünschten Betriebsart; und
Multiplexiexen der generierten Nutzdaten und Einsetzen der Nutzdaten in den Nutzlastabschnitt, und Hinzufügen eines Anfangsblockabschnitts zum Nutzlastabschnitt, um den gewünschten Synchronmultiplexiexungsrahmen zu generieren und den generierten Rahmen an ein Messziel auszugeben.

12. Synchronmultiplexierungsrahmengenerierungsverfahren nach Anspruch 11, wobei
der Synchronmultiplexierungsrahmen als ein STM-Rahmen des SDH-Schemas oder ein STS-Rahmen des SONET-Schemas vorgesehen ist,
das Auflisten und Anzeigen dazu vorgesehen ist, in einer gewünschten Betriebsart eine Rahmenstruktur von jedem Kanal in einem TUG3 im STM-Rahmen des SDH-Schemas, der in den generierten Nutzdaten enthalten ist, oder einem STS3 im STS-Rahmen des SONET-Schemas und einem TUG2 im STM-Rahmen des SDH-Schemas, oder einem VTG im STS-Rahmen des SONET-Schemas aufzulisten und anzuzeigen; und
das Einstellen der gewünschten Struktur dazu vorgesehen ist, die Rahmenstruktur von jedem Kanal in den TUGS im STM-Rahmen des SDH-Schemas, der in den generierten Nutzdaten enthalten ist, oder dem STS3 im STS-Rahmen des SONET-Schemas und dem TUG2 im STM-Rahmen des SDH-Schemas, oder dem VTG im STS-Rahmen des SONET-Schemas entsprechend der beliebigen Einstellung auf eine gewünschte Struktur einzustellen.

13. Synchronmultiplexierungsrahmengenerierungsverfahren nach Anspruch 11, darüber hinaus umfassend:
Vorgeben eines Kanals zur Verwendung beim Messen; und
Anzeigen eines von einem anderen Kanal her identifizierbaren Kanals von Rahmenstrukturen, die aufgelistet für jeden Kanal angezeigt werden.

14. Synchronmultiplexierungsrahmengenerierungsverfahren nach Anspruch 11, darüber hinaus umfassend:
Anzeigen eines Generierungsprozesses des gewünschten Synchronmultiplexierungsrahmens, wobei die Anzeige eines Genexiexungspxozesses umfasst:
wenn eine Nutzlaststruktureinstellbetriebsart vorgegeben wird, Anzeigen eines Bitrateneinstellbildschirms, der in der Lage ist, eine momentane Bitrate auf eine gewünschte Bitrate abzuändern und die gewünschte Bitrate einzustellen;
wenn die Verarbeitung zur Einstellung der gewünschten Bitrate zu Ende geht, Anzeigen eines Hauptrahmeneinstellbildschirms, der in der Lage ist, eine momentane Rahmenstruktur auf eine gewünschte Rahmenstruktur abzuändern und die gewünschte Rahmenstruktur im Bereich von Bitraten einzustellen, mit dem eine Hauptrahmenstruktur zur Verwendung beim Messen eingestellt wurde;
wenn die Verarbeitung zur Einstellung der Hauptrahmenstruktur zu Ende geht, Anzeigen eines Messkanaleinstellbildschirms, der in der Lage ist, einen Messkanal zur Verwendung beim Messen in der Hauptrahmenstruktur durch einen AUG-Kanal, einen TUG3-Kanal, und einen TUG2-Kanal beliebig vorzugeben;
wenn die Messkanalvorgabe zu Ende geht, Anzeigen eines Kanalstrukturbildschirms, und zwar so, dass eine Liste von Rahmenstrukturen, die jeweils einer Kombination aus dem TUG3-Kanal und dem TUG2-Kanal entspricht, angezeigt wird, und von der Kombination eine Position eines durch die Messkanalvorgabeverarbeitung vorgegebenen Messkanals so angezeigt wird, dass sie von einem anderen Kanal her identifiziert wird;
Anzeigen eines Editierbildschirms, der zu editieren in der Lage ist, nachdem eine Rahmenstruktur eines anderen Kanals als des Messkanals abgeändert wurde, nach der Anzeige des Kanalstrukturbildschirms; und
wenn die Verarbeitung zum Editieren einer Rahmenstruktur eines anderen Kanals als des Messkanals zu Ende geht, Wiederanzeigen eines Kanalstrukturbildschirms, der durch Wiedergabe eines Ergebnisses des Editierens abgeändert wurde.

## Revendications

1. Appareil de génération de trames de multiplexage synchrone servant à générer une trame de multiplexage synchrone dans un procédé SDH ou un procédé SONET, pour tester l'équipement d'un système de transmission synchrone, l'appareil comprenant :
une partie de génération de données utiles (21) adaptée pour générer des données utiles devant être insérées dans une structure de trame pour chacun parmi un canal TUG3/STS3 et un canal TUG2/VTG au niveau d'une partie de données utiles de la trame de multiplexage synchrone,
**caractérisé en ce qu'**il comprend en outre :
une partie d'exploitation (35) pouvant spécifier de manière arbitraire une structure de trame souhaitée de chaque canal qui est comprise dans les données utiles devant être insérées dans la partie de données utiles, comprenant les canaux TUG3/STS3 et TUG2/VTG ;
un affichage (36) qui est adapté pour afficher un procédé de génération de la trame de multiplexage synchrone souhaitée ;
une partie de définition de la structure de données utiles (40) qui est adaptée pour définir : une structure de trame de chaque canal qui est comprise dans les données utiles devant être insérées dans la partie de données utiles en fonction de la structure souhaitée spécifiée par la partie d'exploitation (35), comprenant les canaux TUG3/STS3 et TUG2/VTG ; et pour lister et afficher la structure de trame de chaque canal qui est comprise dans les données utiles générées par la partie de génération de données utiles, comprenant les canaux TUG3/STS3 et TUG2/VTG, définie sur la structure souhaitée, dans un mode souhaité sur l'affichage ; et
une partie de génération de trames (30) qui est adaptée pour multiplexer les données utiles générées par la partie de génération de données utiles (21) et pour insérer les données utiles dans la partie de données utiles, et pour ajouter une partie d'en-tête à la partie de données utiles pour générer la trame de multiplexage synchrone souhaitée et pour fournir la trame générée à une cible de mesure.

2. Appareil de génération de trames de multiplexage synchrone selon la revendication 1, dans lequel la trame de multiplexage synchrone est fournie comme une trame STM du procédé SDH ou une trame STS du procédé SONET,
dans lequel la partie de définition de la structure de données utiles (40) est adaptée pour lister et afficher dans un mode souhaité sur l'affichage (36) une structure de trame de chaque canal dans un TUG3 dans la trame STM du procédé SDH qui est comprise dans les données utiles générées par la partie de génération de données utiles (21) ou un STS3 dans la trame STS du procédé SONET et un TUG2 dans la trame STM du procédé SDH ou un VTG dans la trame STS du procédé SONET, et
une structure de trame de chaque canal dans le TUGS dans la trame STM du procédé SDH qui est comprise dans les données utiles générées par la partie de génération de données utiles (21) ou le STS3 dans la trame STS du procédé SONET et le TUG2 dans le STM du procédé SDH ou le VTG dans le STS du procédé SONET peut être définie sur la structure souhaitée spécifiée par la partie d'exploitation (35).

3. Appareil de génération de trames de multiplexage synchrone selon la revendication 1, dans lequel
la partie de définition de la structure de données utiles (40) a des moyens de spécification du canal de mesure pour spécifier un canal à utiliser pour mesurer en fonction de la structure souhaitée spécifiée par la partie d'exploitation (35), et
un canal spécifié par les moyens de spécification du canal de mesure est affiché pour pouvoir être identifié à partir d'un autre canal, des structures de trame affichées dans une liste pour chaque canal sur l'affichage (36).

4. Appareil de génération de trames de multiplexage synchrone selon la revendication 2, dans lequel
la trame de multiplexage synchrone est fournie comme une trame STM dans le procédé SDH ou une trame STS dans le procédé SONET, et
la partie de génération de données utiles (21) a :
une partie de génération de conteneur virtuel d'ordre faible (22) qui est adaptée pour générer un conteneur virtuel d'ordre faible dans la trame STM du procédé SDH ou dans la trame STS du procédé SONET ; des parties de génération de données TUG2 ou VTG (23(1, 1) à 23(3, 7)), chacune ayant une structure de canal 3 x 7, dont chacune génère des données TUG2 dans la trame STM du procédé SDH ou des données VTG dans la trame STS du procédé SONET ; et des parties de génération de données TUS3 ou STS3 (24(1) à 24(3)), chacune ayant 3 structures de canal pour générer des données TUGS dans la trame STM du procédé SDH ou des données STS3 dans la trame STS du procédé SONET.

5. Appareil de génération de trames de multiplexage synchrone selon la revendication 4, dans lequel la partie de génération de conteneur virtuel d'ordre faible (22) est élaborée, en fonction de la structure de trame définie par la partie de définition de la structure de données utiles (40) dans le cas de la génération d'un conteneur virtuel d'ordre faible (VC11, VC12, VC2) dans la trame STM du procédé SDH, pour générer des conteneurs virtuels d'ordre faible VC1 et VC2 sur la base d'un conteneur C1, composés d'un conteneur C11 de 1,544 Mb/s et d'un conteneur C12 de 2,048 Mb/s, ceux-ci contenant des données de trame à faible vitesse et un conteneur C2 (6,312 Mb/s) et fournir ces VC1 (VC11, VC12) et VC2 à chacune des parties de génération de données TUG2 (23(1, 1) à 23(3, 7)).

6. Appareil de génération de trames de multiplexage synchrone selon la revendication 5, dans lequel chacune des parties de génération de données TUG2 (23(1, 1) à 23(3, 7)) est élaborée pour fournir, par 3 x 7 canaux, tout en collectant, par 3 canaux, des données TUG3 (TUG3 (1) - TUG3(3)) obtenues en collectant 7 canaux (TUG2 (1, 1) - TUG2 (1, 7), TUG2 (2, 1) - - TUG2 (2, 7), TUG2 (3, 1) - TUG2 (3, 7)) de TUG2 au moyen de la partie d'exploitation (35) via la partie de définition de la structure de données utiles (40) dans le but de la préparation d'un cas dans lequel une structure de trame a été spécifiée pour générer un conteneur virtuel d'ordre élevé VC4, et pour générer des données TUG2 pour le canal 3 x 7 à la réception du conteneur virtuel d'ordre faible en multiplexant les données TU1 seulement après la génération de TU1 et TU2 et en additionnant un pointeur TU.

7. Appareil de génération de trames de multiplexage synchrone selon la revendication 6, dans lequel, dans le cas où une structure de trame a été spécifiée pour générer un conteneur virtuel d'ordre élevé VC4 tout en collectant, par trois canaux, des données TUGS obtenues en collectant 7 canaux de TUG2 au moyen de la partie d'exploitation (35) via la partie de définition de la structure de données utiles (40), les données TUG2 pour 3 x 7 canaux générées par les parties de génération de données TUG2 (23(1, 1) à 23(3, 7)) sont fournies aux parties de génération de données TUG3 (24(1) à 24(3)) par 7 canaux, les données fournies sont collectées comme des données TUG3(1) à TUG3(3) pour 3 canaux, et les données collectées sont fournies à la partie de génération de trames (30).

8. Appareil de génération de trames de multiplexage synchrone selon la revendication 6, dans lequel, dans le cas où une structure de trame a été spécifiée en utilisant un conteneur virtuel d'ordre faible VC3 auquel on ajoute un POH à un conteneur C3 (44,736 Mb/s ou 34,368 Mb/s) pour un quelconque des 3 canaux de TUG3 au moyen de la partie d'exploitation (35) via la partie de définition de la structure de données utiles (40), une partie de génération de données TUG3 correspondant à un canal spécifié dans les parties de génération de données TUG3 (24(1) à 24(3)) des 3 canaux est élaborée pour fournir à la partie de génération de trames (30) les données TUG3 provenant de la partie de génération de données TUG3 (24) comme les données TUG3 en générant des données TU3 pour ajouter un pointeur TU à un conteneur virtuel d'ordre faible VC3 généré par la partie de génération de conteneur virtuel d'ordre faible (22) sans utiliser les données TUG2.

9. Appareil de génération de trames de multiplexage synchrone selon la revendication 7, dans lequel
la partie de génération de trames (30) a une partie de génération de données AU (30) et une partie d'ajout d'entête (32),
les données TUG3(i) à TUG3(3) pour 3 canaux sont fournies à la partie de génération de données AU (31),
la partie de génération de données AU (31) est adaptée pour générer un conteneur virtuel d'ordre élevé VC4 en ajoutant un POH à une collecte de données TUG3(1) à TUG3(3) pour 3 canaux, et pour générer un ensemble de données AU4 en ajoutant un pointeur AU indiquant une position d'insertion d'une trame dans le conteneur virtuel VC4, fournissant ainsi les données générées à la partie d'ajout d'en-tête (32), et
la partie d'ajout d'en-tête (32) est élaborée pour effectuer un ensemble de trames STM-N souhaité au moyen de la partie d'exploitation (35) via la partie de définition de la structure de données utiles (40) en ajoutant un SOH aux données AUG-1 composées de l'un ensemble de données AU4 ou de données AUG-N (N : 4, 16, 64, 256) obtenues en collectant les données AUG1 par une pluralité de canaux, fournissant ainsi la trame effectuée à un débit binaire déterminé en fonction de N, N étant un quelconque de 1, 4, 16, 64, et 256.

10. Appareil de génération de trames de multiplexage synchrone selon la revendication 9, dans lequel la partie d'ajout d'en-tête (32) est adaptée pour multiplexer par N les mêmes données AUG1 dans le cas où le N est égal ou supérieur à 4.

11. Procédé de génération de trames de multiplexage synchrone servant à générer une trame de multiplexage synchrone dans un procédé SDH ou un procédé SONET, pour tester l'équipement d'un système de transmission synchrone, le procédé comprenant :
la génération de données utiles devant être insérées dans une structure de trame pour chacun parmi un canal TUG3/STS3 et un canal TUG2/VTG au niveau d'une partie de données utiles de la trame de multiplexage synchrone,
**caractérisé en ce qu'**il comprend en outre :
spécifier de manière arbitraire une structure de trame souhaitée de chaque canal qui est comprise dans les données utiles devant être insérées dans la partie de données utiles comprenant les canaux TUG3/STS3 et TUG2/VTG ;
définir une structure de trame de chaque canal des données utiles devant être insérées dans la partie de données utiles à la structure souhaitée spécifiée de manière arbitraire comprenant les canaux TUG3/STS3 et TUG2/VTG ;
lister et afficher la structure de trame de chaque canal qui est comprise dans les données utiles devant être insérées dans la partie de données utiles définie sur la structure souhaitée comprenant les canaux TUG3/STS3 et TUG2/VTG, dans un mode souhaité ; et
multiplexer les données utiles générées et insérer les données utiles dans la partie de données utiles, et ajouter une partie d'en-tête à la partie de données utiles pour générer la trame de multiplexage synchrone souhaitée et fournir la trame générée à une cible de mesure.

12. Procédé de génération de trames de multiplexage synchrone selon la revendication 11, dans lequel
la trame de multiplexage synchrone est fournie comme une trame STM du procédé SDH ou une trame STS du procédé SONET,
le listage et l'affichage sont destinés à lister et afficher dans un mode souhaité une structure de trame de chaque canal dans un TUG3 dans la trame STM du procédé SDH qui est comprise dans les données utiles générées ou un STS3 dans la trame STS du procédé SONET et un TUG2 dans la trame STM du procédé SDH ou un VTG dans la trame STS du procédé SONET ; et
la définition de la structure souhaitée est destinée à définir la structure de trame de chaque canal dans le TUGS dans la trame STM du procédé SDH comprise dans les données utiles générées ou le STS3 dans la trame STS du procédé SONET et le TUG2 dans le STM du procédé SDH ou le VTG dans la trame STS du procédé SONET sur une structure souhaitée en fonction de la définition arbitraire.

13. Procédé de génération de trames de multiplexage synchrone selon la revendication 11, comprenant en outre :
la spécification d'un canal à utiliser pour mesurer ; et
l'affichage d'un canal spécifié pouvant être identifié à partir d'un autre canal, des structures de trame affichées dans la liste pour le chaque canal.

14. Procédé de génération de trames de multiplexage synchrone selon la revendication 11, comprenant en outre :
l'affichage d'un procédé de génération de la trame de multiplexage synchrone souhaitée, l'affichage d'un procédé de génération comprenant :
lorsqu'un mode de définition de la structure de données utiles est spécifié, afficher un écran de définition de débit binaire pouvant changer un débit binaire actuel à un débit binaire souhaité et définir le débit binaire souhaité ;
lorsque le traitement pour définir le débit binaire souhaité se termine, afficher un écran de définition de trame principale pouvant changer une structure de trame actuelle en une structure de trame souhaitée et définir la structure de trame souhaitée dans la plage de débits binaires auxquels une structure de trame principale à utiliser pour mesurer a été définie ;
lorsque le traitement pour définir la structure de trame principale se termine, afficher un écran de définition de canal de mesure pouvant spécifier de manière arbitraire un canal de mesure à utiliser par un canal AUG, un canal TUG3, et un canal TUG2 pour mesurer dans la structure de trame principale ;
lorsque la spécification du canal de mesure se termine, afficher un écran de structure de canal de telle sorte qu'une liste de structures de trame, chacune correspondant à une combinaison du canal TUG3 et du canal TUG2 soit affichée, et, de la combinaison, une position d'un canal de mesure spécifié par le traitement de spécification de canal de mesure est affichée de façon à être identifiée à partir d'un autre canal ;
afficher un écran d'édition pouvant éditer après le changement d'une structure de trame d'un canal autre que le canal de mesure, à la suite de l'affichage de l'écran de structure de canal ; et
lorsque le traitement pour éditer une structure de trame de chaque canal autre que le canal de mesure se termine, réafficher un écran de structure de canal changé en reflétant un résultat de l'édition.
